# EUROPÄISCHE PATENTSCHRIFT

(11) **EP 0 882 888 B1**
(45) Veröffentlichungstag und Bekanntmachung des Hinweises auf die Patenterteilung: **22.08.2001**
(21) Anmeldenummer: 98108605.1
(22) Anmeldetag: 12.05.1998
(51) Int. Cl.: F03B 1/02

(54) **Laufrad einer Pelton-Turbine**
Rotor for Pelton turbine
Rotor de turbine Pelton

(30) Priorität: 06.06.1997 AT 97197
(43) Veröffentlichungstag der Anmeldung: 09.12.1998
(73) Patentinhaber: VA TECH HYDRO GmbH & Co., 1140 Wien (AT)
(72) Erfinder: Chapuis, Lionel, 1630 Bulle (CH); Koller, Franz, 1220 Wien (AT); Fröschl, Karl, 4300 St. Valentin (AT); Falkner, Rudolf, 4050 Traun (AT)
(74) Vertreter: VA TECH Patente GmbH

(56) Entgegenhaltungen:
- DE-A- 3 938 356
- DE-B- 1 086 640
- GB-A- 497 440
- GB-A- 583 291
- GB-A- 715 858
- GB-A- 723 248
- L. CHAPUIS & K. FRÖSCHL: "Optimized fabrication of Pelton turbine runers" HYDROPOWER & DAMS, Bd. 2, 1998, Seiten 30-32, XP002076715 sutton ,Uk

## Beschreibung

Die vorliegende Erfindung bezieht sich auf ein Laufrad einer Pelton-Turbine mit einer Vielzahl von an einem scheibenförmigen Rad angeordneten Bechern, welche aus einer einstückig mit dem scheibenförmigen Rad ausgebildeten Becherwurzel und einem mehrteiligen Becherkörper bestehen.

Zur Herstellung von Pelton-Rädem ist es bekannt, diese in einem Stück aus Gussmaterial herzustellen, wobei jedoch diese bekannten Herstellungstechniken nicht vollkommen zufriedenstellend sind. Die komplexe Geometrie des Rades ist oft Grund für Schwierigkeiten anläßlich des Gießvorganges, wobei insbesondere bei großen Rändern der Gießvorgang stark erschwert wird und das Risiko von Gießfehlem mit sich bringt, welche sich auf die Lebensdauer des Rades nachteilig auswirken. Derartige Gießfehler sind darüber hinaus mit derzeit bekannten Prüfverfahren teilweise schwer nachweisbar, sodass insbesondere bei großen Pelton-Rädern beim Vorhandensein von Gießfehlem, welche nicht nachgewiesen werden konnten, die Gefahr eines Bruches insbesondere im Bereich der Becherwurzel sehr groß ist.

Es wurde daher bereits vorgeschlagen, anstelle von gegossenen Rädern geschmiedete Räder einzusetzen, bei welchen die Möglichkeiten zur Vermeidung von Materialfehlem vergrößert sind. Es ist jedoch zu bemerken, dass allgemein die Herstellung von derartigen geschmiedeten Werkstücken, welche insbesondere für den Fall, dass das Rad gemeinsam mit den Bechem in einem Stück hergestellt, d. h. geschmiedet, werden soll, aufgrund der komplexen Geometrie äußerst aufwendig ist. Es ist hierbei festzuhalten, dass bei der Herstellung großer Pelton-Räder der Aufwand und die Schwierigkeiten bei der Herstellung derselben aus geschmiedetem Material mit sich vergrößemdem Durchmesser stark ansteigen, sodass es praktisch nicht möglich ist, unter Berücksichtigung von wirtschaftlichen Gesichtspunkten derartige vollständig bzw. aus einem Stück geschmiedete Pelton-Räder mit einem annehmbaren und konkurrenzfähigen Preis-Leistungs-Verhältnis herzustellen.

Es sind daher unterschiedliche Vorschläge bekannt geworden, um selbst bei Verwendung von wenigstens teilweise geschmiedeten Elementen derartige Laufräder einer Pelton-Turbine auch bei großen Abmessungen zu wirtschaftlich vertretbaren Bedingungen zu erzeugen. So ist beispielsweise der AT-PS 394 093 und der DE-PS 39 38 357 eine Pelton-Radstruktur zu entnehmen, wobei ein aus einzelnen Bechern, die zu einem Radstem zusammengefügt sind, bestehendes Pelton-Rad durch mindestens zwei symmetrisch zur Mittelebene liegende Radscheiben über zylindrische Schultern der Becherfüße der Becher zentriert wird und eine entsprechende Spannvorrichtung zur Lagerung der Becherfüße zwischen den zwei Radscheiben vorgesehen ist. Gemäß einer abgewandelten Ausführungsform eines Laufrades einer Pelton-Wasserturbine, wie sie beispielsweise der EP-B 0 522 336 oder den korrespondierenden deutschen Offenlegungsschriften DE-A 41 27 622 und DE-A 41 43 378 zu entnehmen ist, ist vorgesehen, die einzelnen Becher an ihren Wurzeln zu einem ringförmigen Kranz zu verschweißen, um den Kranz an seiner Innenseite mit ringförmigen Schweißnähten mit dem Außenrand der Radscheibe zu verschweißen, um derart das Laufrad herzustellen.

Gemäß einer weiteren abgewandelten Ausführungsform gemäß der EP-A 0 346 681 oder der GB 583.291 ist bekannt geworden, das Laufrad einer Pelton-Turbine mit Fortsätzen zur Befestigung einzelner Becher auszubilden, wobei die Festlegung der einzelnen Becher im Bereich ihrer Wurzeln über entsprechende Verschraubungen an den Fortsätzen des Laufrades erfolgt

Bei sämtlichen dieser bekannten Ausführungsformen ist somit vorgesehen, im Bereich der Becherwurzel, welche den am höchsten beanspruchten Bereich eines derartigen Pelton-Rades darstellt, eine Festlegung der Becher am Rad bzw. an der radförmigen Scheibe, sei es durch Verspannen, Verschweißen oder Verschrauben, vorzusehen. Es ist unmittelbar einsichtig, dass insbesondere in diesem höchstbeanspruchten Bereich der Becherwurzel durch das Vorsehen von entsprechenden Verbindungsstellen eine entsprechend große Gefahr des Auftretens von Bruchstellen bzw. Fehlern besteht oder ein übermäßig rascher und großer Verschleiß zu befürchten ist

Darüber hinaus ist beispielsweise aus der EP-A 0 496 181 sowie der korrespondierenden US-PS 5 233 115 ein Verfahren sowie eine Vorrichtung zur Herstellung von metallischen Werkstücken mit einer Hilfsvorrichtung bekannt geworden, wobei beispielsweise zur Herstellung eines Pelton-Rades auf eine geschmiedete Nabe, welche als Basiskörper bzw. als scheibenförmiges Rad dient, durch ein schichtweises Auftragsschweißen die Becher an der Nabe ausgebildet werden. Es ist unmittelbar einsichtig, dass ein derartiges Auftragsschweißen für zumeist eine komplizierte Geometrie aufweisende Becher überaus aufwendig ist und die mittels komplizierter Steuer- und Kontrolleinrichtungen durchzuführenden Schweißarbeiten einen entsprechend großen Zeitraum beanspruchen. Darüber hinaus sind auch in diesem Fall im Bereich der Becherwurzeln, d. h. des Anschlusses der einzelnen Becher an die Scheibe bzw. das scheibenförmige Rad, besonders beanspruchte Verbindungsstellen zwischen der geschmiedeten Nabe und den durch mehrschichtiges Auftragsschweißen herzustellenden Bechern ausgebildet, sodass die oben angedeuteten Nachteile auch bei dieser Ausbildung nicht vermieden werden können.

Ein Laufrad für eine Pelton-Turbine der eingangs genannten Art ist in der GB-A-723 248, der GB-A-715 858 und der DE-A-1 086 640 geoffenbart. In dem zuerst genannten Dokument sind zwei Varianten von Pelton-Rädern beschrieben, bei welchen die Becherwurzel einstückig mit dem Laufrad ausgebildet ist Bei einer ersten Variante ist ein einteiliger Becherkörper vorgesehen, welcher über gekrümmte oder spitz geformte Grenzflächen mit der Becherwurzel verschweißt ist Bei einer zweiten Variante weist der mehrteilige Becherkörper einen einstückig mit der Becherwurzel ausgebildeten Mittelteil und zwei Seitenteile auf. In der GB-A-715 858 wird ein zweiteiliger Becherkörper über spitz geformte Grenzflächen mit der Becherwurzel verschweißt In dem drittgeannten Dokument ist ein Pelton-Laufrad beschrieben, welches im Wesentlichen der zweiten Variante des erstgenannten Dokumentes entspricht, wobei die Verbindung der Seitenteile des Becherkörpers mit dem einstückigen Mittelteil des Laufrades einen Vorsprung zur Aufnahme von Zentrifugalkräften aufweist.

Die vorliegende Erfindung zielt nun darauf ab, ein Laufrad einer Pelton-Turbine der obengenannten Art weiter zu verbessern, wobei mit einfachen Verfahrensschritten und entsprechend geringen Kosten ein Laufrad einer Pelton-Turbine mit großen Abmessungen herstellbar ist, ohne im besonders beanspruchten Bereich der Becherwurzel, d. h. des unmittelbaren Anschlusses des Bechers an das scheibenförmige Rad, eine hohen Beanspruchungen ausgesetzte Verbindung vorsehen zu müssen. Zur Lösung dieser Aufgabe ist das erfindungsgemäße Laufrad einer Pelton-Turbine im wesentlichen dadurch gekennzeichnet, dass die gesondert gefertigten Becherkörper 3-teilig ausgebildet sind, dass die Becherwurzel über eine in axialer Richtung gerade Verbindungslinie mit einem Mittelteil gleicher Breite verbunden ist, und dass zu beiden Seiten des Mittelteils Seitenteile vorgesehen sind, die über je eine in radialer Richtung geraden Verbindungslinie seitlich sowohl mit dem Mittelteil, als auch mit der Becherwurzel verbunden sind. Da das Rad einstückig mit den Becherwurzeln ausgebildet ist, kann der besonders beanspruchte Bereich der Becherwurzeln entsprechend sorgfältig und widerstandsfähig ausgebildet werden, ohne beispielsweise eine Schwächung dieses Bereiches durch Vorsehen von speziellen Verbindungsstellen zwischen dem Rad und den einzelnen Bechern, beispielsweise eine Verschraubung, zu bewirken. Darüber hinaus ist unmittelbar einsichtig, dass die gemeinsame Ausbildung des scheibenförmigen Rades mit den Becherwurzeln nur zu einer geringfügigen Vergrößerung des scheibenförmigen Rades führt, wobei der Bereich der Becherwurzeln eine entsprechend einfache geometrische Ausbildung aufweist, sodass der hierdurch erforderliche Mehraufwand bei der Herstellung des Rades gemeinsam mit den Becherwurzeln gegenüber einer bloßen Herstellung des Rades geringfügig bzw. vernachlässigbar ist Erfindungsgemäß ist darüber hinaus vorgesehen, dass die Becherkörper, welche eine entsprechend komplexe geometrische Konfiguration aufweisen, gesondert gefertigt und 3-teilig ausgebildet werden und mit den einstückig mit dem Rad ausgebildeten Becherwurzeln verbunden sind. Es ergibt sich somit bei der Herstellung eines erfindungsgemäßen Laufrades einer Pelton-Turibne eine wesentliche Verringerung des Arbeitsaufwandes dahingehend, dass die Becherkörper, welche für sich gesehen eine komplexe geometrische Figur aufweisen mögen, getrennt und als vergleichsweise kleine Bauteile leicht und kostengünstig herstellbar sind, während die Abmessungen des scheibenförmigen Rades mit den einstückig damit verbundenen Becherwurzeln nur geringfügig erhöht werden und dieses Rad insgesamt eine vergleichsweise einfache und damit leicht und kostengünstig herzustellende Gesamtstruktur aufweisen. Nach Herstellung der einzelnen Elemente kann in einfacher Weise eine Festlegung der Becherkörper an dem mit den Becherwurzeln ausgestatteten, scheibenförmigen Rad zur Herstellung eines Laufrades einer Pelton-Turbine erfolgen, wobei unmittelbar einsichtig ist, dass bei der erfindungsgemäßen Ausbildung im Bereich der besonders beanspruchten Becherwurzeln keine gesonderten Verbindungsstellen vorzusehen sind. Durch die erfindungsgemäß vorgeschlagene Konstruktion läßt sich durch die widerstandsfähigere Ausbildung insgesamt die Radfestigkeit erhöhen, wodurch höhere Umdrehungszahlen und damit eine höhere Leistung erzielbar sind. Durch die besondere Form der durch die Verbindungslinien gebildeten Verbindungsflächen zwischen den einzelnen Elementen der Becherkörper, sowie zwischen den Becherkörpem mit den Becherwurzeln ist sichergestellt, dass sich neben der Möglichkeit einer Herstellung des Laufrades mit guter Werkstoffqualität im Bereich der am meisten beanspruchten Zonen der Becherwurzeln auch ein entsprechend großer Verbindungsbereich zwischen der Becherwurzel und dem gesondert gefertigten Becherkörper erzielen läßt Allgemein lassen sich bei Verwendung von mehrteiligen Ausbildungen des Becherkörpers durch die hierdurch erzielbaren kleineren Abmessungen der Einzelteile nicht nur Vorteile im Hinblick auf eine kostengünstigere Herstellung, sondern auch betreffend eine erhöhte Qualität der Einzelteile durch eine Verminderung von möglichen Werkstofffehlem erzielen.

Gemäß einer besonders bevorzugten Ausführungsform ist vorgesehen, dass die Becherwurzeln in radialer Richtung jeweils eine Länge aufweisen, welche sich vom wurzelseitigen Ende bis maximal zur Hälfte der becherförmigen Ausnehmung der Becher erstreckt, sodass sich bei geringer Vergrößerung der Abmessungen des scheibenförmigen Rades, welches integriert die Becherwurzeln aufweist, und insgesamt einfacher Geometrie eine kostengünstige Ausbildung des gesamten Laufrades ohne Schwächung des besonders beanspruchten Anschlusses der Becherwurzeln an das Rad bei gleichzeitig guter Zugänglichkeit für die Bearbeitung im Bereich der Becherwurzeln, erhältlich ist Weiters können durch Wahl der tatsächlichen Länge der Becherwurzel bis zu einem gewissen Ausmaß der Bechermulde bzw. becherförmigen Ausnehmung auch die erzielbaren bzw. zulässigen Spannungszustände in den Bechern bzw. Becherelementen berücksichtigt werden. Gleichzeitig läßt sich eine große Genauigkeit der Form der gesamten Turbine und eine bessere Zugänglichkeit für Kontrollen während der Fabrikation erzielen.

Für eine einfache und zuverlässige Verbindung des Becherkörpers bzw. der gegebenenfalls vorgesehenen Einzelteile des Becherkörpers mit der Becherwurzel ist erfindungsgemäß vorgesehen, dass eine feste Verbindung einer Becherwurzel mit einem Becherkörper durch eine Schweißverbindung erfolgt Aufgrund der Tatsache, dass der Becherkörper bzw. die Einzelteile desselben klein ausgebildet sind, und durch die einstückige Ausbildung der Becherwurzeln mit dem scheibenförmigen Rad ist eine zuverlässige und sichere Verbindung der Einzelteile erzielbar, wobei bei einer Schweißverbindung der Schweißvorgang beispielsweise unter Schutzgasatmosphäre vorgenommen wird. Weiters läßt sich auch eine einfache Überprüfung der Verbindungsstellen zwischen der Becherwurzel und dem Becherkörper insbesondere unter Einsatz bekannter Prüfverfahren erzielen.

Gemäß einer alternativen Ausführungsform für eine einfache Verbindung ist erfindungsgemäß vorgesehen, dass eine lösbare Verbindung einer Becherwurzel mit einem Becherkörper durch eine Schraub- oder Keilverbindung erfolgt, wobei besonders bevorzugt vorgesehen ist, dass bei einer Schraub- bzw. Keilverbindung zwischen einer Becherwurzel und einem Becherkörper ein Dichtungselement oder eine Dichtungsschweißnaht zwischen der Becherwurzel und dem Becherkörper vorgesehen ist, um eine entsprechend dichte und widerstandsfähige Verbindungsstelle sicherstellen zu können.

Wie oben bereits angedeutet, zeichnen sich geschmiedete Teile eines Laufrades einer Pelton-Turbine vor allem durch verbesserte mechanische Eigenschaften und eine geringere Fehleranfälligkeit bzw. eine leichtere Korrigierbarkeit gegebenenfalls vorhandener Fehler aus. Erfindungsgemäß ist daher vorgesehen, dass das Rad mit den einstückig damit ausgebildeten Becherwurzeln aus einem geschmiedeten Material hergestellt ist, wie dies einer besonders bevorzugten Ausführungsform entspricht. Aufgrund der Tatsache, dass die Becherwurzeln lediglich eine geringe Vergrößerung der Dimensionen des scheibenförmigen Rades mit sich bringen und eine zumeist einfache geometrische Konfiguration aufweisen, läßt sich somit unter Minimierung des bei der Ausbildung von geschmiedeten Elementen höheren Kostenaufwandes der besonders beanspruchte Bereich des Anschlusses der Becherwurzeln an das scheibenförmige Rad aus einem entsprechend widerstandsfähigen und fehlerfrei zu bearbeitenden Material unter besonders günstigen wirtschaftlichen Gesichtspunkten herstellen.

Für die Ausbildung der Becherkörper ist gemäß einer besonders bevorzugten Ausführungsform vorgesehen, dass die Becherkörper aus einem gegossenen oder geschmiedeten Material hergestellt sind, wobei besonders bevorzugt vorgeschlagen wird, dass bei einem mehrteilig ausgebildeten Becherkörper dieser wenigstens teilweise aus geschmiedetem Material ausgebildet ist. Wie oben bereits mehrfach erwähnt, weisen die Becherkörper für sich gesehen vergleichsweise geringe Abmessungen auf, sodass die Herstellung derselben aus geschmiedetem Material unter Berücksichtigung der dadurch erzielbaren, höheren Festigkeit gegebenenfalls gegenüber Becherkörpem aus gegossenem Material hervorgerufene, geringfügig erhöhte Kosten in jedem Fall rechtfertigen. Darüber hinaus kann insbesondere bei einem mehrteilig ausgebildeten Becherkörper die Ausbildung der einzelnen Elemente aus unterschiedlichen Materialien erfolgen, wobei die vergleichsweise geringer beanspruchten, seitlichen Bereiche bzw. Seitenwangen beispielsweise aus kostengünstigerem, gegossenem Material hergestellt werden können, während die mittleren Teile beispielsweise aus geschmiedetem Material hergestellt sein können.

Die Erfindung wird nachfolgend anhand von in der beiliegenden Zeichnung schematisch dargestellten Ausführungsbeispielen eines Laufrades einer Pelton-Turbine näher beschrieben. In dieser zeigen:
Fig. 1 eine schematische Seitenansicht eines erfindungsgemäßen Laufrades einer Pelton-Turbine;
Fig. 2 eine Ansicht nach der Linie II-II der Fig. 1 in vergrößertem Maßstab;
Fig. 3 in nochmals vergrößertem Maßstab eine Teilansicht auf den Bereich der Verbindung eines Becherkörpers mit der Becherwurzel
   und
Fig. 4 einen Schnitt nach der Linie IV-IV der Fig. 3, wobei Fig. 3 eine Ansicht in Richtung des Pfeiles III der Fig. 4 ist.

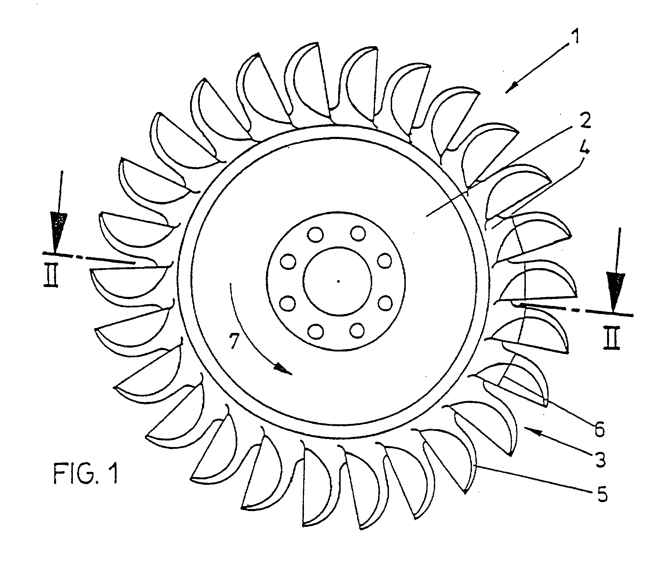

In Fig. 1 ist allgemein mit 1 ein Laufrad einer Pelton-Turbine bezeichnet, wobei an einem scheibenförmigen Rad 2 eine Vielzahl von Bechern 3 angeordnet ist. Wie in Fig. 1 schematisch angedeutet, ist das Laufrad 2 einstückig mit den Becherwurzeln 4 ausgebildet, an welche jeweils schematisch mit 5 bezeichnete Becherkörper anschließen, wobei eine Verbindungslinie zwischen den Becherwurzeln 4 und den zugehörigen Becherkörpem 5 bei einigen Bechern 3 in Fig. 1 schematisch mit 6 angedeutet ist Die Laufrichtung des Laufrades in Fig. 1 ist schematisch durch den Pfeil 7 angedeutet

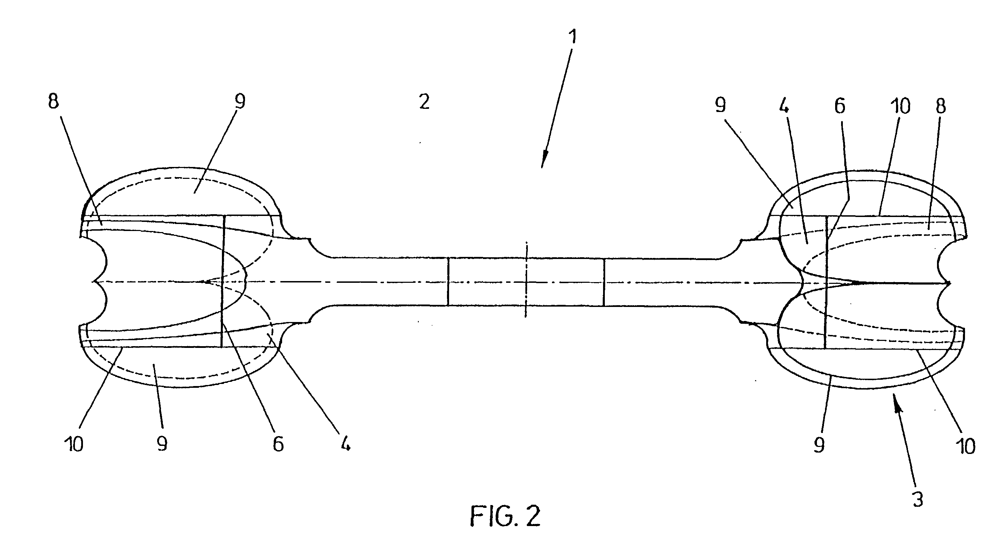

Bei der vergrößerten Darstellung gemäß Fig. 2 ist ersichtlich, dass das scheibenförmige Rad 2, welches teilweise im Schnitt dargestellt ist, einstückig mit wiederum mit 4 bezeichneten Becherwurzeln ausgebildet ist, wobei jeweils an die Becherwurzeln 4 bei der Ausführungsform gemäß Fig. 2 aus einer Mehrzahl von Elementen zusammengesetzte Becherkörper anschließen. Hierbei ist vorgesehen, dass ein mittlerer Abschnitt 8 der Becherkörper über die wiederum mit 6 bezeichnete gerade Verbindungslinie mit der Becherwurzel 4 verbunden ist, wobei darüber hinaus seitliche Abschnitte 9 über eine jeweils mit 10 bezeichnete gerade Verbindungslinie seitlich sowohl mit der Becherwurzel 4 als auch mit dem mittleren Abschnitts 8 des Becherkörpers 5 verbunden sind. Es kann die Verbindung bzw. Festlegung beispielsweise über eine Verschweißung der einzelnen Elemente 8, 9 und 4 entlang der definierten Verbindungslinien 6 und 10 erfolgen. Es ist weiters ersichtlich, dass sich die Becherwurzeln 4 über einen Teilbereich der becherförmigen Ausnehmung des Bechers 3 erstrecken.

Hierbei kann vorgesehen sein, dass das scheibenförmige Rad 2 mit den damit einstückig verbundenen Becherwurzeln 4 aus einem geschmiedeten Material zur Erzielung entsprechend hoher mechanischer Festigkeit ausgebildet ist, während die einzelnen Elemente bzw. Abschnitte 8 bzw. 9 der Becherkörper zur Ausbildung des Bechers 3 ebenfalls aus geschmiedetem Material ausgebildet sein können. Alternativ kann vorgesehen sein, dass beispielsweise die weniger beanspruchten, seitlichen Abschnitte bzw. Seitenwangen 9 aus einem kostengünstiger herstellbaren Gußmaterial gebildet sind, während der mittlere Abschnitt 8, dessen Breite im Wesentlichen der Breite der Becherwurzel 4 entspricht, wiederum aus einem geschmiedeten Material hergestellt ist.

Für den Fall, dass anstelle von Schweißverbindungen entlang der Verbindungslinien eine Verschraubung oder eine Keilverbindung der Elemente 8, 9 mit der Becherwurzel 4 vorgenommen wird, ist im Bereich der Verbindungslinien eine entsprechende Dichtung bzw. eine oberflächliche Dichtungsschweißnaht vorzusehen.

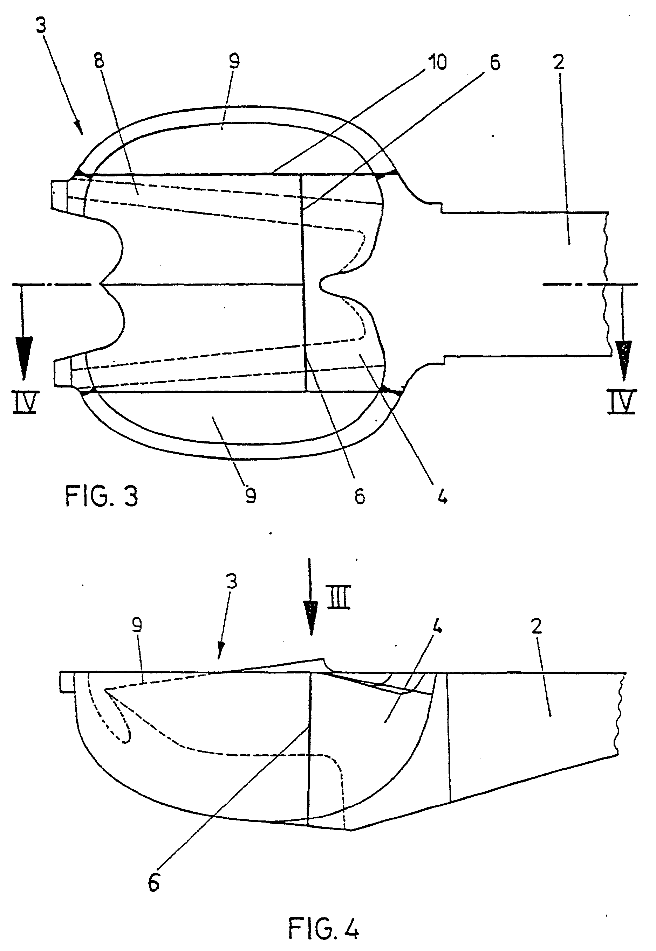

Bei der in Rg. 3 und 4 in nochmals vergrößerter Abbildung dargestellten Ausführungsform ist ersichtlich, dass das scheibenförmige Rad unmittelbar einstückig mit den Becherwurzeln 4 ausgebildet ist, worauf über Verbindungslinien 6 und 10 wiederum der mittlere Abschnitt 8 sowie die seitlichen Abschnitte 9 zur Ausbildung je eines Bechers 3 mit der Becherwurzel 4 verbunden sind. Die in den Fig. 2, 3 und 4 zusätzlich angedeuteten, teilweise strichliert dargestellten Linien deuten die komplexe geometrische Konfiguration des Bechers 3 an.

## Patentansprüche

1. Laufrad einer Pelton-Turbine mit einer Vielzahl von an einem scheibenförmigen Rad angeordneten Bechern, welche aus einer einstückig mit dem scheibenförmigen Rad ausgebildeten Becherwurzel und einem mehrteiligen Becherkörper bestehen, **dadurch gekennzeichnet, dass** die gesondert gefertigten Becherkörper (5; 8, 9) 3-teilig ausgebildet sind, **dass** die Becherwurzel (4) über eine in axialer Richtung gerade Verbindungslinie (6) mit einem Mittelteil (8) gleicher Breite verbunden ist, und **dass** zu beiden Seiten des Mittelteils (8) Seitenteile (9) vorgesehen sind, die über je eine in radialer Richtung geraden Verbindungslinie (10) seitlich sowohl mit dem Mittelteil (8), als auch mit der Becherwurzel (4) verbunden sind.

2. Laufrad nach Anspruch 1, dadurch gekennzeichnet, dass die Becherwurzeln (4) in radialer Richtung jeweils eine Länge aufweisen, welche sich vom wurzelseitigen Ende bis maximal zur Hälfte der becherförmigen Ausnehmung der Becher (3) erstreckt.

3. Laufrad nach einem der Ansprüche 1 oder 2, dadurch gekennzeichnet, dass eine feste Verbindung einer Becherwurzel (4) mit einem Becherkörper (5; 8, 9) durch eine Schweißverbindung erfolgt.

4. Laufrad nach einem der Ansprüche 1 oder 2, dadurch gekennzeichnet, dass eine lösbare Verbindung einer Becherwurzel (4) mit einem Becherkörper (5; 8, 9) durch eine Schraub- oder Keilverbindung erfolgt.

5. Laufrad nach Anspruch 4, dadurch gekennzeichnet, dass bei einer Schraub- oder Keilverbindung zwischen einer Becherwurzel (4) und einem Becherkörper (5) ein Dichtungselement oder eine Dichtungsschweißnaht zwischen der Becherwurzel (4) und dem Becherkörper (5) vorgesehen ist.

6. Laufrad nach einem der Ansprüche 1 oder 5, dadurch gekennzeichnet, dass das Rad (2) mit den einstückig damit ausgebildeten Becherwurzeln (4) aus einem geschmiedeten Material hergestellt ist.

7. Laufrad nach einem der Ansprüche 1 oder 6, dadurch gekennzeichnet, dass die Becherkörper (5; 8, 9) aus einem gegossenen oder geschmiedeten Material hergestellt sind.

8. Laufrad nach Anspruch 7, dadurch gekennzeichnet, dass bei einem mehrteilig ausgebildeten Becherkörper (8, 9) dieser wenigstens teilweise aus geschmiedeten Material ausgebildet ist.

## Claims

1. A rotor of a Pelton turbine with a plurality of buckets, which are arranged on a disk-shaped wheel and are formed by a bucket root integrally formed with the disk-shaped wheel and a multi-part bucket element, characterised in that the separately manufactured bucket elements (5; 8, 9) are constructed in three parts, the bucket root (4) is connected to a central section (8) of equal width via a straight connecting line (6) in the axial direction, and lateral sections (9) are provided either side of the central section (8), which lateral sections are laterally connected both to the central section (8) and to the bucket root (4) in each case via a straight connecting line (10) in the radial direction.

2. A rotor according to claim 1, characterised in that the bucket roots (4) each have a length in the radial direction which extends from the root-side end at the most to the mid point of the bucket-shaped recess of the bucket (3).

3. A rotor according to one of claims 1 or 2, characterised in that a secure connection of a bucket root (4) to a bucket element (5; 8, 9) is effected by a welding connection.

4. A rotor according to one of claims 1 or 2, characterised in that a releasable connection of a bucket root (4) to a bucket element (5; 8, 9) is effected by a screw or wedge connection.

5. A rotor according to claim 4, characterised in that, in the case of a screw or wedge connection between a bucket root (4) and a bucket element (5), a sealing element or a sealing welding seam is provided between the bucket root (4) and the bucket element (5).

6. A rotor according to one of claims 1 or 5, characterised in that the wheel (2), together with the bucket roots (4) integrally formed therewith, is manufactured from a forged material.

7. A rotor according to one of claims 1 or 6, characterised in that the bucket elements (5; 8, 9) are manufactured from a cast or forged material.

8. A rotor according to claim 7, characterised in that, in the case of a bucket element (8, 9) constructed in several parts, the said bucket element is at least partially made of forged material.

## Revendications

1. Rotor d'une turbine Pelton, comportant une pluralité de godets, disposés sur une roue discoïde, godets constitués d'une racine de godet, réalisée d'une seule pièce avec la roue discoïde, et d'un corps de godet en plusieurs parties, caractérisé en ce que les corps de godet (5; 8, 9) fabriqués séparément sont réalisés en 3 parties, en ce que les racines de godet (4) sont reliées à une partie médiane (8) de même largeur, sur une ligne de liaison (6) rectiligne orientée en direction axiale, et en ce que, des deux côtés de la partie médiane (8), sont prévues des parties latérales (9), qui sont reliées, chaque fois sur une ligne de liaison (10) rectiligne en direction radiale, latéralement, tant à la partie médiane (8), qu'également à la racine de godet (4).

2. Rotor selon la revendication 1, caractérisé en ce que les racines de godet (4) présentent chacune, en direction radiale, une longueur allant de l'extrémité située côté racine jusqu'au maximum à la moitié de l'évidement, en forme de godet, des godets (3).

3. Rotor selon l'une des revendications 1 ou 2, caractérisé en ce qu'une liaison rigide est réalisée par un procédé de liaison par soudage, entre une racine de godet (4) et un corps de godet (5; 8, 9).

4. Rotor selon l'une des revendications 1 ou 2, caractérisé en ce qu'une liaison rigide est réalisée par liaison par vissage ou par interaction de formes, entre une racine de godet (4) et un corps de godet (5; 8, 9).

5. Rotor selon la revendication 4, caractérisé en ce que, dans le cas d'une liaison par vissage ou par interaction de formes entre une racine de godet (4) et un corps de godet (5), un élément d'étanchéité ou bien un cordon de soudure d'étanchéité est prévu entre le racine de godet (4) et le corps de godet (5).

6. Rotor selon l'une des revendications 1 ou 5, caractérisé en ce que la roue (2), avec les racines de godet (4) réalisées d'une seule pièce avec elle, est fabriquée à partir d'un matériau forgé.

7. Rotor selon l'une des revendications 1 ou 6, caractérisé en ce que les corps de godet (5; 8, 9) sont fabriqués à partir d'un matériau moulé ou forgé.

8. Rotor selon la revendication 7, caractérisé en ce que, dans le cas d'un corps de godet (8, 9) réalisé en plusieurs parties, celui-ci est réalisé au moins partiellement en un matériau forgé.
